# EUROPÄISCHE PATENTSCHRIFT

(11) **EP 0 597 904 B1**
(45) Veröffentlichungstag und Bekanntmachung des Hinweises auf die Patenterteilung: **27.12.1995**
(21) Anmeldenummer: 92915970.5
(22) Anmeldetag: 29.07.1992
(51) Int. Cl.: C09J 201/00, C09J 189/00

(54) **WASSERHALTIGER KLEBSTOFF**
AQUEOUS GLUE
ADHESIF AQUEUX

(30) Priorität: 07.08.1991 DE 4126074
(43) Veröffentlichungstag der Anmeldung: 25.05.1994
(73) Patentinhaber: Henkel Kommanditgesellschaft auf Aktien, 40191 Düsseldorf (DE)
(72) Erfinder: BROICH, Ludwig, D-4000 Düsseldorf 13 (DE); HERLFTERKAMP, Bernhard, D-4250 Bottrop (DE); ONUSSEIT, Hermann, D-5657 Haan (DE)
(86) Internationale Anmeldenummer: EP9201721
(87) Internationale Veröffentlichungsnummer: WO9303111

(56) Entgegenhaltungen:
- US-A- 2 357 073
- US-A- 2 943 071
- US-A- 3 692 713

## Beschreibung

Die Erfindung betrifft einen wasserhaltigen Klebstoff auf Basis von Leim und Harz sowie seine Verwendung zur Verklebung von Papier auf Kunststoffoberflächen.

Leime sind wäßrige kolloidale Lösungen von
a) tierischen Polymeren, z.B. Casein und Glutin oder Polymeren aus Häuten, Knochen oder Fischen,
b) von pflanzlichen Polymeren, z.B. Gummi arabicum, Cellulosenitrat, Carboxymethylcellulose sowie Celluloseether, Dextrin und Stärke,
c) von synthetischen Polymeren wie Polyvinylpyrrolidon, Polyacrylsäure-Derivaten und Polyvinylalkohol.
Die Leime gehören zu der Klasse der einkomponentigen, physikalisch kalt oder heiß abbindenden Klebstoffe, bei denen das Wasser während der Verklebung entweicht. Sie dienen daher überwiegend zum Verkleben von saugfähigen Werkstoffen wie Papier, Pappe oder Holz miteinander. Die Leime sind jedoch ungeeignet, um Papier, insbesondere Papieretiketten mit Kunststoffoberflächen dauerhaft zu verbinden (siehe K. Dullinger "Etikettiertechnik von A bis Z" in Zeitschrift für Lebensmitteltechnik (ZFL) 1987, S. 503 bis 507).

Es ist auch bekannt, Leimen, z.B. Stärke- und Dextrin-Leimen Kunstharz-Dispersionen zuzusetzen, um deren Wasserfestigkeit zu verbessern. Kunstharz-Dispersionen, z.B. Polyvinylester und Polyacrylsäureester sowie deren Copolymere werden auch allein oder zusammen mit Polyvinylalkohol zum Kleben von Papier auf Kunststoff verwendet. Der Zusatz von Polyvinylalkohol dient dabei zur Erhöhung der Naßklebkraft der Dispersion. Derartige vollsynthetische Systeme eignen sich gut zur Verklebung von Papier auf Kunststoff-Oberflächen (siehe Dullinger, obiges Zitat). Es hat jedoch den Nachteil, daß eine hohe Naßklebkraft nur durch relativ große Mengen PVAC erreicht werden kann, wodurch dabei gleichzeitig die Adhäsion zu Kunststoffoberflächen deutlich verringert wird.

In der DE 40 00 241 A1 wird ein Klebstoff aus tierischem Leim, Leimhydrolysat oder Säure-Gase in und mindestens einem Stoff aus der Gruppe: Harnstoff, Thio-Harnstoff, N-Alkyl-Harnstoff und Guanidin-Nitrat sowie gegebenenfalls weiteren bei der Leimherstellung üblichen Zusatzstoffen beschrieben. Zur Verbesserung der Planlage können Balsamharz, Zucker oder Dextrin zugesetzt werden. Als hygroskopische Substanzen können beispielsweise Glycerin oder Polyglykol verwendet werden. Der Klebstoff kann in Form einer wäßrigen Lösung oder als Feststoff eingesetzt werden. Es wird die Verwendung als Warm(Heiß)-Siegelmaterial oder Warmklebstoff insbesondere zur Oberflächenbeschichtung beansprucht.

Daraus ergibt sich die Aufgabe, einen Klebstoff zu finden, der ähnlich wie die Leime weitgehend auf natürlichen Rohstoffen basiert, aber bei Verklebungen von Papier auf Kunststoff-Oberflächen zu ähnlichen Festigkeiten führt wie die Kunstharz-Dispersionen und eine hohe Naßklebkraft aufweist.

Die erfindungsgemäße Lösung dieser Aufgabe ist den Patentansprüchen zu entnehmen. Sie besteht hauptsächlich in der Kombination von
A) einem Leim,
B) einem Kolophoniumharz, einem synthetischen Harz und/oder deren Derivat und
C) einem ein- oder mehrwertigen Alkohol.

Die Leime können zwar auch auf synthetischen Polymeren basieren, z.B. auf Polyvinylalkohol, bevorzugt werden aber Leime aus einem oder mehreren Bestandteilen folgender Gruppe: Casein, Stärke, Stärkederivate, Dextrin und Celluloseether. Als Casein kommt vor allem das aus der Milch durch Säurefällung gewonnene Casein in Frage. Als Stärkederivate kommen solche in Frage, wie sie durch Umsetzung von nativer oder abgebauter, beispielsweise oxidativ abgebauter Stärke zu erhalten sind. Bei diesen Stärkederivaten handelt es sich in der Regel um Umsetzungsprodukte mit beispielsweise Ethylenoxid, Propylenoxid, Acrylnitril, Chloressigsäure oder auch Epoxypropansulfonsäure. Der Substitutionsgrad soll relativ niedrig liegen, etwa zwischen 0,02 bis 0,1 DS. Als Dextrin kann das handelsübliche dünn-, mittel- oder dick-kochende Dextrin verwendet werden, das in bekannter Weise durch Abbau von Stärke gewonnen werden kann.

Bei dem Kolophoniumharz handelt es sich um glasartige amorphe Massen mit durchschnittlichen Molekulargewichten unter 2 000 g/Mol. Sie werden aus dem Rohharz von Koniferen erhalten. Sie bestehen überwiegend aus ungesättigten Carbonsäuren mit der Bruttoformel C₂₀H₃₀O₂ wie Abietinsäure und ihren Isomeren. Daneben können aber auch noch mehr oder weniger Neutralstoffe wie Fettsäureester, Terpenalkohole und Kohlenwasserstoffe enthalten sein. Vorzugsweise wird ein derivatisiertes Kolophoniumharz eingesetzt, z.B. ein hydriertes oder disproportioniertes Kolophoniumharz, wobei die Derivatisierung, vor allem der Erhöhung der Wasserlöslichkeit dient, z.B. Verseifung oder Addition von Maleinsäure. Brauchbare Kolophoniumharze und seine Derivate sind Balsam-, Tall- und Wurzel-Harz. Besonders geeignet sind wasserlösliche Balsamharz-Derivate mit einer Löslichkeit von mindestens 3 g in 100 g Wasser bei 25 °C.

Unter "synthetischen Harzen" werden Produkte verstanden, die durch Kondensation oder Polymerisation entstehen, im allgemeinen amorph sind, keinen scharfen Erweichungspunkt haben und deren Zustand von flüssig über harzartig bis fest reichen kann. Vorzugsweise werden Kohlenwasserstoff-Harze eingesetzt, also thermoplastische Polymere mit einer geringen mittleren Molekularmasse von weniger als 2 000. In Frage kommen sowohl Petroleum-Harze, Kohlenteer-Harze als auch Terpen-Harze.

Die Alkohole dienen nicht nur als Lösungsvermittler, sondern sie sind auch wesentlich für die Festigkeit der Verklebung. Sie sind daher vorzugsweise flüssig und verdampfen bei 25 °C aus dem Klebstoffsystem praktisch nicht. Bevorzugt werden Alkohole mit einer Löslichkeit von mehr als 3 g in 100 g Wasser bei 25 °C eingesetzt. Die Alkohole können aliphatische oder cycloaliphatische, gesättigte oder ungesättigte Kohlenwasserstoffe sein mit gerader oder verzweigter Kette. Sie können auch noch weitere Heteroatome enthalten, z.B. 0 in Form einer Ether-Gruppe. Konkrete Beispiele sind Methanol, Ethanol, Propanol, Butanol, Benzylalkohol, Cyclohexanol, Di-, Tri- und Polyethylenglykol. Bevorzugt werden zwei- und mehrwertige Alkohole, insbesondere Ethan-1,2-diol, Propan-1,2-diol und/oder Propan-1,2,3-triol.

Der Gehalt an den Komponenten A), B) und C) im fertigen Klebstoff kann in weiten Bereichen variieren. Er hängt nicht nur von dem Gehalt der jeweils anderen Komponenten ab, sondern auch von den Anwendungsbedingungen sowie von der Konzentration weiterer Zusätze. Vorteilhaft ist es jedoch, wenn der Gehalt an Leim-bildenden Polymeren im fertigen Klebstoff 3 bis 50, vorzugsweise 5 bis 20 Gew.-% beträgt, der Gehalt an Kolophoniumharz oder synthetischem Harz bzw. ihren Derivaten 3 bis 75, vorzugsweise 5 bis 50 Gew.-% und der Gehalt an Alkohol 3 bis 50, vorzugsweise 5 bis 25 Gew.-%.

Der Klebstoff kann außer den Grundkomponenten A), B) und C), die die Eigenschaften des Klebstoffes wesentlich bestimmen, Zusätze enthalten, um spezielle Eigenschaften zu erzielen, z.B. im Hinblick auf Viskosität, Löslichkeit, Haltbarkeit, Verarbeitungseigenschaften, Farbe usw..
So setzt man als Konservierungsmittel vorteilhaft Benzoate, Fluoride wie Natriumfluorid, amidische Substanzen und Hydroxybenzoesäureester, z.B. p-Oxybenzoesäuremethylester oder - butylester in Mengen von 0,2 bis 0,6 Gew.-% ein.
Als Antischaummittel kommen in Frage: Stearate, Silikonöl sowie Additionsprodukte von Ethylenoxid oder Propylenoxid an Fettalkohole mit 12 bis 18 C-Atomen in Mengen von 0,3 bis 2,5 Gew.-%.
Die Fließfähigkeit des Klebstoffs kann durch Zusatz bestimmter wasserlöslicher niedermolekularer Verflüssiger in an sich bekannter Weise reguliert werden. Dazu eignen sich besonders Harnstoff, Thioharnstoff und/oder Dicyandiamid, aber auch anorganische oder organische Salze wie Halogenide, Nitrate, Sulfate usw.. Derartige Stoffe werden zweckmäßigerweise in einer Konzentration von 0 bis 25 Gew.-%, vorzugsweise 1 bis 15 Gew.-% eingesetzt.
Weitere Zusätze können sein: Duftstoffe, Farbstoffe oder Füllstoffe sowie Tenside als Benetzungsmittel.

Der Gesamtfeststoffgehalt der erfindungsgemäßen Klebstoffe liegt im Bereich von 25 bis 75 Gew.-%, vorzugsweise im Bereich von 30 bis 65 Gew.-%, bezogen auf den fertigen Klebstoff.

Der erfindungsgemäße Klebstoff wird durch Mischen der Komponenten in an sich bekannter Weise hergestellt. Zweckmäßigerweise stellt man dazu zunächst den Leim her, vorzugsweise gemäß der DE 31 46 364 und mischt ihn dann mit einer wäßrigen oder alkoholischen Lösung bzw. Dispersion des Kolophoniumharzes oder seines Derivates sowie mit dem Alkohol bei 20 bis 30 °C in einem Rührmischer bis eine homogene Verteilung erreicht wird. Die Zusätze werden zweckmäßigerweise dem Leim hinzugefügt.
Die Viskosität des fertigen Klebstoffs liegt üblicherweise im Bereich von 10 000 bis 200 000 mPa·s, insbesondere im Bereich von etwa 20 000 bis 100 000 bei 25 °C nach Brookfield.

Die erfindungsgemäßen Klebstoffe eignen sich insbesondere zum Verkleben von Kunststoff-Oberflächen mit Papier, insbesondere mit Papier-Etiketten.
Eine gute Verklebung setzt eine ausreichende Benetzung der Kunststoff-Oberfläche mit dem erfindungsgemäßen wäßrigen Klebstoff voraus. Sie ist insbesondere dann gegeben, wenn die Oberflächenenergie Sigma ≧ 33 mJm⁻² beträgt, wenn die Messung gemäß ASTM 2578-67 durchgeführt wird. So werden mit Polystyrol, Polycarbonat, Polyvinylchlorid, Polyethylenterephthalat so gute Verklebungen erreicht, daß Papier-Etiketten beim Entfernen zerreißen. Aber auch für andere Kunststoffe ist der erfindungsgemäße Klebstoff brauchbar, z.B. für Polyethylen oder Polypropylen.
Die zu beklebenden Formteile können durchgehend aus Kunststoff sein, z.B. Kunststoffbehälter wie Flaschen, Dosen, Eimer, Becher usw.. Sie können aber auch nur eine Kunststoff-Oberfläche haben und im übrigen aus Metall, Glas oder Holz sein, z.B. Weißblech-Dosen, beschichtete Glasflaschen, lackiertes Holz usw..

Unter Papier wird ein flächiger, im wesentlichen aus Fasern, vorwiegend pflanzlicher Herkunft, bestehender Werkstoff verstanden, der durch Entwässerung einer Faserstoffaufschlämmung und anschließende Verdichtung und Trocknung des Faserfilzes erhalten wird. Das Flächengewicht beträgt im allgemeinen bis zu 225 g/m². Es kann aber auch darüber hinausgehen (Karton und Pappe). Welche besonderen Anforderungen an Papiere für Papier-Etiketten zu stellen sind, geht aus der Veröffentlichung von K. Dullinger hervor (siehe vorgenanntes Zitat). Das Papier kann auch beschichtet sein, z.B. mit Aluminium oder einer Kunststoffschicht.

Mit dem erfindungsgemäßen Klebstoff ist es möglich, Papier auf unvorbehandelten Kunststoffen wesentlich besser zu verkleben als mit den üblichen Leimen aus Stärke, Casein usw.. Die Festigkeit wird so weit angehoben, daß Etiketten beim Entfernen von Kunststoff-Gegenständen reißen, genau wie bei Dispersions-Klebstoffen auf Kunstharzbasis. Diese hohe Festigkeit war nicht zu erwarten, da die Komponenten A), B) und C) weder einzeln noch in Zweierkomination zu einer solchen Festigkeit führen. Diese Festigkeit wird erst durch Kombination von allen drei Komponenten erreicht. Außerdem ermöglicht der erfindungsgemäße Klebstoff eine Naßkraft, die deutlich über dem Niveau von handelsüblichen Dispersionsklebstoffen liegt.

Die Erfindung ermöglicht die Herstellung von wäßrigen Klebstoffen auf Basis natürlicher Rohstoffe. Es ist auch möglich, transparente Klebstoffe herzustellen. Sie sind bezüglich Lagerstabilität und Phasentrennung völlig unproblematisch.

Die Erfindung soll nun anhand von Beispielen im einzelnen beschrieben werden:

### Klebstoff I

Es wurden 55 Gew.-Teile eines Casein-Klebstoffs, 35 Gew.-Teile einer Harzseife und 10 Gew.-Teile Glycerin bei Raumtemperatur innerhalb von 15 Minuten gemischt. Der Casein-Klebstoff hatte einen Festkörpergehalt von ca. 35 Gew.-% und bestand im wesentlichen aus 25 Gew.-% Casein, ca. 8 Gew.-% Harnstoff und 2 Gew.-% Natronlauge in Form einer 35 %igen Lösung. Der Rest von 65 Gew.-% war entionisiertes Wasser. Bei der Harzseife handelt es sich um eine Mischung aus 50 Gew.-Teilen Balsamharz, 15 Gew.-Teilen KOH und 35 Gew.-Teilen Wasser.
Der Klebstoff war auch noch bei einer Schichtdicke von 10 cm transparent. Er hatte eine Viskosität von 30 000 mPa·s bei 25 °C nach Brookfield.

### Klebstoff II

Wie oben angegeben, wurden 50 Gew.-Teile Casein-Klebstoff, 30 Gew.-Teile Harzseife (wie oben) und 20 Gew.-Teile Ethylenglykol gemischt. Der Klebstoff war ebenfalls transparent und hatte eine Viskosität von 20 000 mPa·s bei 25 °C nach Brookfield.
(Dabei handelte es sich um einseitig gußgestrichene und gestrichene Papiere mit einem Flächengewicht von ca. 70 - 90 g/m².)

### Klebstoff III

Wie im Beispiel I wurden 25 Gew.-Teile Casein-Klebstoff, 34 Gew.-Teile WINGTACK 10, 36 Gew.-Teile Kolophonium-Harz und 5 Gew.-Teile Glycerin gemischt. Der Klebstoff war transparent und hatte eine Viskosität von 40 000 mPa·s bei 25 °C nach Brookfield.
WINGTACK 10 ist ein Handelsprodukt der Fa. Goodyear. Es besteht aus einer Mischung von Terpen- und Petroleum-Harzen und erweicht bei 10 °C. Seine Viskosität beträgt 20 000 bis 40 000 cP bei 25 °C. Sein Molekulargewicht ist 450.

### Verklebung

Mit den obigen Klebstoffen I, II und III wurden unvorbehandelte Flaschen aus PVC, PET, PC und PS mit den Papier-Etiketten superkote SK und terroset der Fa. Feldmühle entsprechend der VDI-Richtlinie 3821 verklebt, indem zunächst der Klebstoff in einer Schichtdicke von ca. 100 »m auf das Etikett aufgetragen wurde. Danach wurden Etikett und Flasche mit geringem Druck zusammengefügt. Nach einer Lagerung von 72 Stunden bei 25 bis 40 °C wurde versucht, das Etikett von der Flasche zu entfernen. Es zerriß in allen Fällen.
Bei den Papieretiketten handelte es sich um einseitig gußgestrichene und gestrichene Papiere mit einem Flächengewicht von ca. 70 bis 90 g/m².

### Vergleich

Verklebt man auf entsprechende Weise das Etikett mit den Kunststoff-Flaschen mit Hilfe der einzelnen Ausgangskomponenten, also allein mit dem Casein-Klebstoff, der Harzseife und dem Glycerin oder mit einer Mischung von zwei Komponenten davon, und zwar Casein-Klebstoff/Harzseife, Casein-Klebstoff/Glycerin und Harzseife/Glycerin im Gewichtsverhältnis 1/1, dann ließ sich das Etikett nach der Trocknung ohne Mühe entfernen. Teilweise ist es sogar von alleine heruntergefallen.

## Patentansprüche

1. Wasserhaltiger Klebstoff auf Basis von Leim und Harz, dadurch gekennzeichnet, daß er
A) 3 bis 50 Gew.-% eines Leimes auf der Basis von Polyvinylalkohol, Stärke, Stärkederivate, Dextrin, Celluloseether und/oder Casein
B) 3 bis 75 Gew.-% eines Kolophoniumharzes, eines Kohlenwasserstoffharzes und/oder deren Derivate und
C) 3 bis 50 Gew.-% eines ein- oder mehrwertigen Alkohols mit einer Löslichkeit von mehr als 3 g in 100 g Wasser bei 25 °C
enthält.

2. Klebstoff nach Anspruch 1, gekennzeichnet durch einen Leim aus einem oder mehreren der folgenden Stoffe: Stärke, Stärkederivaten, Dextrin, Celluloseether und Casein.

3. Klebstoff nach Anspruch 1 oder 2, gekennzeichnet durch wasserlösliche Kolophoniumharz-Derivate, besonders verseifte Derivate.

4. Klebstoff nach Anspruch 1, 2 oder 3, gekennzeichnet durch die Alkohole Ethan-1,2-diol, Propan-1,2-diol und/oder Propan-1,2,3-triol.

5. Klebstoff nach mindestens einem der Ansprüche 1 bis 4, gekennzeichnet durch folgenden Gehalt der Komponenten A), B) und C), bezogen auf den fertigen Klebstoff:
- 5 bis 20 Gew.-% an Komponente A),
- 5 bis 50 Gew.-% an Komponente B) und
- 5 bis 25 Gew.-% an Komponente C).

## Claims

1. A water-containing adhesive based on glue and resin, characterized in that it contains
A) 3 to 50% by weight of a glue based on polyvinyl alcohol, starch, starch derivatives, dextrin, cellulose ether and/or casein,
B) 3 to 75% by weight of a rosin, a hydrocarbon resin and/or derivatives thereof and
C) 3 to 50% by weight of a monohydric or polyhydric alcohol with a solubility of more than 3 g in 100 g of water at 25°C.

2. An adhesive as claimed in claim 1, characterized by a glue of one or more of the following substances:
starch, starch derivatives, dextrin, cellulose ethers and casein.

3. An adhesive as claimed in claim 1 or 2, characterized by water-stable rosin derivatives, more particularly saponified derivatives.

4. An adhesive as claimed in claim 1, 2 or 3, characterized by the alcohols ethane-1,2-diol, propane-1,2-diol and/or propane-1,2,3-triol.

5. An adhesive as claimed in at least one of claims 1 to 4, characterized by the following content of components A), B) and C), based on the final adhesive:
- 5 to 20% by weight of component A),
- 5 to 50% by weight of component B) and
- 5 to 25% by weight of component C).

## Revendications

1. Adhésif aqueux à base de colle et de résine, caractérisé en ce qu'il contient
A) de 3 à 50% d'une colle à base d'alcool polyvinylique, d'amidon, de dérivés de l'amidon, de dextrine, d'éther de cellulose et/ou de caséine,
B) de 3 à 75% en poids d'une résine de colophane, d'une résine d'hydrocarbure et/ou de leurs dérivés, et
C) de 3 à 50% en poids d'un alcool mono- ou polyvalent présentant une solubilité supérieure à 3 g dans 100 g d'eau à 25°C.

2. Adhésif selon la revendication 1, caractérisé par une colle constituée par une ou plusieurs des substances ci-après : l'amidon, les dérivés de l'amidon, la dextrine, l'éther de cellulose et la caséine.

3. Adhésif selon la revendication 1 ou 2, caractérisé par des dérivés hydrosolubles de résine de colophane, en particulier des dérivés saponifiés.

4. Adhésif selon la revendication 1, 2 ou 3, caractérisé par les alcools éthane-1,2-diol, propane-1,2-diol et/ou propane-1,2,3-triol.

5. Adhésif selon au moins une des revendications 1 à 4, caractérisé par la teneur ci-après des composants A), B) et C), rapportée à l'adhésif fini :
- de 5 à 20% en poids du composant A),
- de 5 à 50% en poids du composant B) et
- de 5 à 25% en poids du composant C).
